# FASCICULE DE BREVET EUROPEEN

(11) **EP 3 864 080 B1**
(45) Date de publication et mention de la délivrance du brevet: **04.03.2026**
(21) Numéro de dépôt: 19813926.3
(22) Date de dépôt: 11.10.2019
(51) Int. Cl.: C08K 5/372, B33Y 80/00, B33Y 70/00, B29C 64/00

(54) **POUDRE DE POLYMÈRE THERMOPLASTIQUE POUR IMPRESSION 3D À RECYCLABILITÉ AMÉLIORÉE**
THERMOPLASTISCHES POLYMERPULVER FÜR 3D-DRUCK MIT VERBESSERTER RECYCLINGFÄHIGKEIT
THERMOPLASTIC POLYMER POWDER FOR 3D PRINTING WITH IMPROVED RECYCLABILITY

(30) Priorité: 11.10.2018 FR 1859438
(43) Date de publication de la demande: 18.08.2021
(73) Titulaire: ARKEMA FRANCE, 92800 Puteaux (FR)
(72) Inventeur: ZOVI, Ornella, 27470 SERQUIGNY (FR); LEMAITRE, Arnaud, 27470 SERQUIGNY (FR); DURAND, Jean-Charles, 27470 SERQUIGNY (FR)
(74) Mandataire: Arkema Patent
(86) Numéro de dépôt international: PCT/FR2019/052419
(87) Numéro de publication internationale: WO 2020/074840

(56) Documents cités:
- DATABASE WPI Week 201623, Derwent World Patents Index; AN 2016-05556U, XP002792098
- DATABASE WPI Week 201607, Derwent World Patents Index; AN 2015-709313, XP002792099
- DATABASE WPI Week 199408, Derwent World Patents Index; AN 1994-062156, XP002792100
- DATABASE CA [online] CHEMICAL ABSTRACTS SERVICE, COLUMBUS, OHIO, US; HEO, MIN-HO ET AL: "Discoloration and the effect of antioxidants on thermo-oxidative degradation of polyamide 6", XP002792101, retrieved from STN Database accession no. 2002:590783
- HEO, MIN-HO ET AL: "Discoloration and the effect of antioxidants on thermo-oxidative degradation of polyamide 6", POLYMER (KOREA) , 26(4), 452-461 CODEN: POLLDG; ISSN: 0379-153X, 2002

## Description

### Objet de l'invention

La présente invention se rapporte à la fabrication de poudres polymères thermoplastiques, notamment polyamide, pouvant être recyclées plusieurs fois dans les procédés d'impression 3D.

### Arrière-plan technique

Par « impression 3D » ou « fabrication additive » au sens de l'invention, on entend tout procédé de fabrication de pièces en volume par ajout ou agglomération de poudre, couche par couche. L'agglomération de poudres par fusion (ci-après « frittage ») est provoquée par un rayonnement, tel que par exemple un faisceau laser (*laser sintering*), un rayonnement infra-rouge, un rayonnement UV, ou toute source de rayonnement électromagnétique permettant de faire fondre la poudre couche par couche pour fabriquer des objets tridimensionnels. La technologie de fabrication d'objets couche par couche est décrite notamment dans la demande de brevet WO2009138692 (pages 1 à 3). Par « impression 3D » ou « fabrication additive » au sens de l'invention, on entend également les technologies de frittage sélectif utilisant un absorbeur, notamment les technologies connues sous les noms « *High Speed Sintering »* (HSS) et *« Multi-Jet Fusion »* (MJF). Dans ces technologies, la fabrication d'objets en 3D est faite également couche par couche à partir d'un fichier numérique, le procédé utilisant une poudre (par exemple un polymère) qui est fondue de manière maîtrisée pour chaque couche constituant l'objet 3D : un absorbeur est déposé sur la couche (au moyen par exemple d'une encre liquide dans le « procédé à jet d'encre ») avant l'exposition de la couche à un rayonnement électromagnétique (par exemple infra-rouge) qui provoque la fusion des zones contenant ledit absorbeur. Par exemple, les documents de brevet US9643359 et EP1648686 décrivent de tels procédés.

L'impression 3D est généralement utilisée pour produire des prototypes, des modèles de pièces (« *rapid prototyping* ») ou pour produire des pièces finies en petites séries (« *rapid manufacturing* »), par exemple dans les domaines : automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage, le sport, l'outillage industriel.

Le terme « frittage » dans la présente description inclut tous ces procédés, quel que soit le type de rayonnement. Même si, dans le texte qui suit, on fait référence le plus souvent au procédé laser sintering, ce qui est écrit pour le laser sintering est bien entendu valable pour les autres procédés de frittage.

Les poudres de polyamide utilisées en frittage ont typiquement un diamètre médian en volume D50 compris dans la gamme de 5 à 200 µm.

Dans les procédés de frittage, il est recommandé d'utiliser un polyamide dont l'écart entre la température de fusion de première chauffe Tf1 et la température de cristallisation Tc est le plus grand possible pour éviter les phénomènes de déformation, et dont l'enthalpie de fusion ΔHf est la plus élevée possible pour obtenir une bonne définition géométrique des pièces fabriquées. Cela permet d'accroître la fenêtre de travail avec la poudre polyamide et de rendre sa mise en œuvre dans un procédé de frittage beaucoup plus aisée. Des procédés d'obtention de telles poudres sont notamment décrits dans les documents FR2867190, FR2873380, et FR2930555. De préférence, l'écart Tf1-Tc des poudres PA utilisées en frittage est compris dans la gamme de 30°C à 50°C.

Pour les procédés de frittage, tels que laser sintering, on privilégie également l'utilisation de poudre de polyamide avec les propriétés suivantes :
La masse moléculaire de la poudre à l'état solide est de préférence suffisamment faible, c'est-à-dire de viscosité inhérente en solution inférieure à 2, à la fois pour que la fusion des grains ne nécessite pas trop d'énergie et pour que la coalescence inter-grains soit suffisante lors du passage du rayonnement de façon à obtenir un objet le moins poreux possible, avec de bonnes propriétés mécaniques.

La poudre lorsqu'elle est fondue doit pouvoir remonter en viscosité, pour atteindre une masse moléculaire suffisante, et garantir une viscosité en solution de la pièce supérieure à 1,5, de sorte que la pièce (objet 3D) présente des propriétés mécaniques acceptables. Typiquement, dans le cas du polyamide, et en particulier du polyamide 11, par « propriétés mécaniques acceptables » au sens de la présente invention, on entend de préférence :
- un module de traction supérieur à 1500 Mpa ;
- un allongement à la rupture supérieur à 40% ;
- une contrainte à la rupture supérieure à 40 MPa, de préférence supérieure à 45 Mpa ; pour des objets construits en X/Y, c'est-à-dire fabriqués majoritairement dans les deux dimensions horizontales ou « à plat » dans le dispositif de frittage ; ces propriétés mécaniques étant toutes mesurées selon la norme ISO 527-1B : 2012.

Au cours de chaque construction, aussi appelée un « *run* », une grande partie de la poudre n'est pas utilisée : par exemple en laser sintering, environ 85% de la poudre n'est pas visée par le laser. Il est donc avantageux de pouvoir réutiliser, c'est-à-dire recycler cette poudre lors de la construction suivante (ou « run » suivant). La poudre de polyamide doit autant que possible avoir conservé ses propriétés initiales : granulométrie, coulabilité, couleur, en particulier indice de jaune (YI), viscosité, propriétés physico-chimiques.

On s'aperçoit que certaines poudres de polyamide nécessitent de modifier les paramètres du dispositif de frittage, en particulier d'augmenter de manière drastique la puissance du rayonnement, à chaque recyclage de la poudre lors de runs successifs. En outre, on constate un déclin très net des propriétés mécaniques des pièces obtenues au fur et à mesure des runs: par exemple, le module en traction est de plus en plus faible, passant sous le seuil de 1300 MPa dès le second run, et l'allongement à la rupture passe inférieur à 15% dès le quatrième run.

Lors d'une construction par frittage, la poudre environnante, c'est-à-dire non touchée par le rayonnement, reste plusieurs heures au-dessus de sa température de cristallisation Tc ce qui peut entraîner une augmentation de la masse moléculaire et donc de la viscosité du polyamide. Par suite, la coalescence entre grains de poudre devient de plus en plus difficile au cours des runs successifs. Ces problèmes sont notamment évoqués aux paragraphes [0012] et [0013] du document de brevet US2006071359.

Plusieurs solutions ont déjà été proposées pour tenter de contrôler ou limiter ces évolutions de masse moléculaire de la poudre à l'état solide.

Le document US2004102539 propose l'ajout de limiteurs de chaine, par apport de groupements carboxyliques en excès durant la polymérisation de polyamide 12.

Le document US2004106691 propose l'utilisation de savons métalliques (0,5%) additionnée à la poudre polyamide. Toutefois, lorsqu'ils sont au contact de certains solvants, les objets fabriqués à partir de ces poudres ont tendance à re-larguer des dérivés de sels métalliques ce qui restreint leur utilisation à certaines applications.

Le document US2006071359 évoque au paragraphe [0015] les inconvénients des solutions décrites dans les deux documents précités. Les pièces obtenues par LS présentent un allongement à la rupture insuffisant (inférieur à 10 %). Ceci serait dû au fait que l'augmentation de la masse moléculaire du polyamide constitutif des pièces est insuffisante pour permettre des propriétés mécaniques acceptables. Pour résoudre ce problème, le document US2006071359 propose un mélange de polyamides à extrémités de chaîne diacide et de polyamides à extrémités de chaîne diamine. Sur le papier, ce procédé peut paraître proche de l'idéal: A l'état solide, c'est à dire pour la poudre qui ne voit pas le laser, il n'y a pas de réaction entre le polyamide à extrémités diacide et le polyamide à extrémités diamine, donc pas d'augmentation de la masse moléculaire de la poudre initiale. En théorie la poudre serait donc recyclable à 100%. A l'état fondu (c'est à dire pour la poudre qui constitue la pièce en construction), le mélange PA diacide et PA diamine réagit et remonte en masse moléculaire, assurant l'obtention de propriétés mécaniques correctes.

Le document US2009291308 indique plusieurs inconvénients de ces mélanges de polyamide à fins de chaîne contrôlées diacide et de polyamide à fins de chaîne contrôlées diamine, en particulier au paragraphe [0006] de ce document : L'utilisateur est en effet obligé d'utiliser cette poudre spécifique aux propriétés différentes de la poudre habituellement utilisée dans les procédés de frittage, et cette poudre ne remplit pas les exigences en terme de conditions du procédé et de produits obtenus par laser sintering.

Une autre solution pour améliorer la recyclabilité de la poudre polyamide est décrite dans le document US7229272 qui concerne une méthode de traitement par liquéfaction de la poudre usagée, dans laquelle on fait passer la poudre dans un fluide. Mais ce procédé n'est pas suffisamment performant de sorte qu'à forte teneur en poudre recyclée (supérieure à 80% en poids), on observe des défauts de surface, tels que l'effet « peau d'orange » c'est-à-dire une surface rugueuse sur l'objet obtenu par frittage, ce que confirme le document US20090291308 au paragraphe [0005].

Le procédé revendiqué dans le document US20090291308 consiste à traiter la poudre utilisée au run précédent avant de recycler ladite poudre traitée lors d'un run ultérieur.

Le traitement consiste à placer un polyamide dans de l'eau ou de la vapeur d'eau à haute température (130 à 150°C) pour l'hydrolyser et donc diminuer sa masse moléculaire. On contrôle la masse moléculaire finale en jouant sur la durée et la température de traitement. Ce procédé nécessite, entre 2 runs successifs, et à proximité du dispositif de frittage, de traiter la poudre à la vapeur d'eau et de la sécher (voir en particulier les revendications 32 à 36). Ce procédé qui nécessite de nombreuses étapes intermédiaires entre les runs n'est pas viable économiquement.

La présente invention a donc pour but de fournir des poudres faciles à mettre en œuvre et recyclables plusieurs fois, c'est-à-dire au moins 3 fois, de préférence au moins 5 fois, voire mieux au moins 10 fois, avec pour chaque cycle ou construction ou *« run »* une teneur en poudre recyclée d'au moins 50%, de préférence d'au moins 60%, de préférence d'au moins 70% en poids, sur le poids total de poudre utilisée en machine à chaque run, dans les procédés de frittage, et qui génèrent des objets aux propriétés mécaniques acceptables et reproductibles.

Autrement dit, mis à part le premier run qui utilise 100% de poudre fraîche, chaque run suivant réutilise au moins 50%, de préférence d'au moins 60%, de préférence d'au moins 70%, en poids de poudre du run précédent qui n'a pas été frittée, sur le poids total de poudre utilisée en machine à chaque run.

Par propriétés mécaniques reproductibles, on entend au sens de la présente invention, des propriétés mécaniques, notamment de module de traction, d'allongement à la rupture, et de contrainte à la rupture, qui restent chacune au moins supérieures à 90% de leur valeur mesurée pour un objet de même forme construit en impression 3D à partir de la poudre fraîche.

Dans la présente description, on précise que lorsqu'il est fait référence à des intervalles, les expressions du type « allant de... à » ou « comportant/comprenant de... à » incluent les bornes de l'intervalle. A l'inverse, les expressions du type « compris entre... et... » excluent les bornes de l'intervalle.

Sauf mention contraire, les pourcentages exprimés sont des pourcentages massiques. Sauf mention contraire, les paramètres auxquels il est fait référence sont mesurés à pression atmosphérique, et température ambiante (23°C).

L'invention est maintenant décrite en détail et de façon non limitative dans la description qui suit.

### Description de l'invention

La Demanderesse a maintenant trouvé que l'utilisation d'un antioxydant thioéther spécifique dans une poudre de polymère, notamment polyamide, permettait de stabiliser la couleur de la poudre, notamment sa blancheur lorsqu'elle est blanche, en particulier en limitant son jaunissement.

Avantageusement, cela peut permettre aussi d'augmenter à une valeur stable la viscosité inhérente de la poudre de polymère non frittée (donc réutilisable) dans un procédé de frittage, celle-ci étant notamment comprise dans la gamme de 1,5 à 2. Avantageusement également, la demanderesse s'est aussi rendue compte que, de manière surprenante, le procédé selon l'invention, pouvait permettre à la fois :
- d'augmenter la viscosité inhérente d'une poudre de polymère, tel que polyamide, non frittée (donc réutilisable) durant son premier passage dans un procédé de frittage (le premier run d'une poudre), et
- de freiner l'évolution de masse moléculaire de la poudre à l'état solide lorsqu'elle n'est toujours pas frittée, c'est-à-dire qu'elle n'est pas concernée par la construction de l'objet 3D, au cours des runs qui suivent le premier run d'une poudre non frittée.

Ceci permet de recycler la poudre non frittée, et d'obtenir les objets aux propriétés mécaniques acceptables et reproductibles au cours des runs.

La présente invention a donc pour objet une poudre destinée à l'impression 3D, notamment dans un procédé de frittage, présentant avantageusement une recyclabilité améliorée, à base de polymère thermoplastique, laquelle incorpore au moins 0,1% en poids de l'antioxydant thioéther pentaerythritol tetrakis (3-dodecylthio propionate ou 3-laurylthiopropionate) sur le poids total (100%) de poudre (polymère + antioxydant thioéther). De préférence le polymère est à base de polyamide, ledit polyamide étant de préférence issu de polycondensation hydrolytique. De préférence également ledit antioxydant thioéther présente un point de fusion inférieur à 140°C, de préférence inférieur à 100°C, de préférence inférieur à 90°C, de préférence inférieur à 70°C.

La présente invention a également pour objet un procédé pour stabiliser la couleur d'une poudre à base de polymère thermoplastique dans un procédé d'impression 3D, dans lequel on incorpore au moins 0,1% en poids dudit antioxydant thioéther sur le poids total de poudre, de préférence ledit thioéther présentant un point de fusion inférieur à 120°C, 110°C, 100°C, 90°C, 80°C ou 70°C.

La présente invention a également pour objet l'utilisation dudit antioxydant thioéther pour stabiliser la couleur d'une poudre destinée à l'impression 3D, à base de polymère thermoplastique.

La présente invention concerne également un procédé d'impression 3D utilisant une poudre destinée à l'impression 3D telle que définie ci-dessus.

De préférence, le procédé d'impression 3D est un procédé par frittage, provoqué par un rayonnement, par exemple un faisceau laser (*laser sintering*), un rayonnement infra-rouge ou un rayonnement UV, avec ou sans un absorbeur.

L'invention concerne également un procédé de fabrication d'article par frittage en utilisant une poudre destinée à l'impression 3D telle que définie ci-dessus, dans lequel la poudre non-frittée est récupérée et réutilisée.

Selon un autre aspect, l'invention a pour objet l'utilisation dudit antioxydant thioéther pour améliorer la recyclabilité d'une poudre destinée à l'impression 3D, à base de polymère thermoplastique.

Avantageusement, selon l'invention, la couleur de la poudre destinée à l'impression 3D est stabilisée par l'adjonction de l'antioxydant thioéther.

Comme on l'entend ici, une couleur est dite stabilisée lorsque la couleur de la poudre destinée à l'impression 3D comprenant l'antioxydant thioéther varie moins au cours de son vieillissement, notamment au cours de runs successifs dans un procédé d'impression 3D, qu'une poudre identique ne comprenant pas d'antioxydant thioéther. En particulier, lorsque la couleur de la poudre est blanche, l'adjonction de l'antioxydant thioéther stabilise la blancheur de la poudre. Plus particulièrement l'adjonction de l'antioxydant thioéther permet de limiter le jaunissement, notamment mesuré par l'indice de jaune (yellowness index, YI) de la poudre. Ainsi, de préférence, l'indice de jaune d'une poudre selon l'invention, ou préparée selon l'invention, exposée à l'air sous une température de 180°C en un volume d'environ 50 mL est inférieur à 15, notamment inférieur à 10 après 48h et est inférieur à 45, notamment inférieur à 30 après 72h.

Par ailleurs, ladite composition selon l'invention permet en particulier d'augmenter et de stabiliser la viscosité inhérente d'un polymère, tel que polyamide, non utilisé ou « non fritté » au cours du premier run, et notamment à une viscosité comprise dans la gamme de 1,5 à 2, ce qui est très avantageux pour le recyclage de ce polyamide dans un procédé de frittage car permet in fine d'obtenir des pièces 3D aux propriétés mécaniques performantes.

La polycondensation hydrolytique est induite par l'eau à haute température. Par exemple, la polycondensation hydrolytique des lactames consiste à ouvrir le lactame par l'eau puis à chauffer sous pression pour polymériser. Eventuellement, un catalyseur tel que l'acide phosphorique peut également être employé dans le procédé hydrolytique. Le polymère thermoplastique utilisable selon l'invention est choisi parmi : polyoléfine, polyéthylène, polypropylène, polychlorure de vinyle, polyacétal, polystyrène, polyimide, polysulfone, poly (N-méthylméthacrylimide), polyméthacrylate de méthyle, fluorure de polyvinylidène, ionomère, polyéthercétone, polyaryléthercétone, polyamide, polyéther, polyester, polydiméthylsiloxane, polycarbonate, et leurs mélanges sous forme de copolymères alternés, statistiques ou à blocs.

Le polyamide utilisable dans la composition et/ou dans le procédé de l'invention peut être un homopolyamide ou un copolyamide. Il peut être un mélange de polyamide et d'au moins un autre polymère, le polyamide formant la matrice et le ou les autres polymères formant la phase dispersée.

Avantageusement le polyamide est sous forme divisée telle que de la poudre ou des granules. Les granules peuvent être ensuite broyés pour faire des poudres.

On entend par « polyamide » au sens de l'invention les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la décanediamine, la dodécaméthylènediarnine, la métaxylylènediamine, le bis-p aminocyclohexylméthane et la triméthylhexaméthylène diamine avec des diacides tels que les acides isophtalique, téréphtalique, adipique, azélaique, subérique, sébacique et dodécanedicarboxylique. A titre d'exemple de polyamide on peut citer le PA 6, le PA 6.6, le PA 10.10, le PA 11 et le PA 12.

On peut aussi utiliser des copolyamides. On peut citer les copolyamides résultant de la condensation d'au moins deux monomères différents, par exemple d'au moins deux acides alpha omega aminocarboxyliques différents ou de deux lactames différents ou d'un lactame et d'un acide alpha oméga aminocarboxylique de nombre de carbone différents. On peut encore citer les copolyamides résultant de la condensation d'au moins un acide alpha oméga aminocarboxylique (ou un lactame), au moins une diamine et au moins un acide dicarboxylique. On peut encore citer les copolyamides résultant de la condensation d'une diamine aliphatique avec un diacide carboxylique aliphatique et au moins un autre monomère choisi parmi les diamines aliphatiques différentes de la précédente et les diacides aliphatiques différents du précédent.

La norme NF EN ISO 1874-1 : 2011 définit une nomenclature des polyamides. Le terme « monomère » dans la présente description des poudres à base de polyamides doit être pris au sens d' « unité répétitive ». Le cas où une unité répétitive du polyamide est constituée de l'association d'un diacide avec une diamine est particulier. On considère que c'est l'association d'une diamine et d'un diacide, c'est-à-dire le couple « diaminediacide », dit aussi « XY », en quantité équimolaire qui correspond au monomère. Ceci s'explique par le fait qu'individuellement, le diacide ou la diamine n'est qu'une unité structurale, qui ne suffit pas à elle seule à former un polymère.

A titre d'exemple de diamine X, on peut citer les diamines aliphatiques ayant de 6 à 12 atomes, la diamine X pouvant être aussi arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM), la méthaxylyènediamine, le bis-p aminocyclohexylméthane et la triméthylhexaméthylène diamine.

A titre d'exemple de diacide (ou acide dicarboxylique) Y, on peut citer les acides ayant entre 4 et 18 atomes de carbone. On peut citer par exemple, l'acide adipique, l'acide sébacique, l'acide azélaique, l'acide subérique, l'acide isophtalique, l'acide butanedioïque, l'acide 1,4 cyclohexyldicarboxylique, l'acide téréphtalique, le sel de sodium ou de lithium de l'acide sulfo-isophtalique, les acides gras dimérisés(ces acides gras dimérisés ont une teneur en dimère d'au moins 98% et sont de préférence hydrogénés) et l'acide dodécanédioïque HOOC-(CH2)10-COOH.

Les monomères lactames ou aminoacides sont dits de type « Z » :

A titre d'exemple de lactames, on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame, l'oenantholactame, le 2-pyrrolidone et le lauryllactame. A titre d'exemple d'aminoacide, on peut citer les alpha-oméga aminoacides, tels que les acides aminocaproïque, amino-7-heptanoïque, amino-11-undécanoïque, n-heptyl-11-aminoundécanoïque et amino-12-dodécanoïque.

De préférence, les poudres à base de polyamide de l'invention comprennent au moins un polyamide choisi parmi les polyamides et copolyamides comprenant au moins un des monomères XY ou Z suivants : 46, 4T, 54, 59, 510, 512, 513, 514, 516, 518, 536, 6, 64, 69, 610, 612, 613, 614, 616, 618, 636, 6T, 9, 104, 109, 1010, 1012, 1013, 1014, 1016, 1018, 1036, 10T, 11, 12, 124, 129, 1210, 1212, 1213, 1214, 1216, 1218, 1236, 12T, MXD6, MXD10, MXD12, MXD14, et leurs mélanges ; en particulier choisi parmi le PA 11, le PA 12, le PA 1010, le PA 6, le PA 6/12, le PA 11/1010, et leurs mélanges.

A titre d'exemples de copolyamides, on peut citer des copolymères de caprolactame et de lauryllactame (PA 6/12), des copolymères de caprolactame, d'acide adipique et d'hexaméthylène diamine (PA 6/66), des copolymères de caprolactame, de lauryl lactame, d'acide adipique et d'hexaméthylène diamine (PA 6/12/66), des copolymères de caprolactame, de lauryllactame, d'acide amino 11 undécanoique, d'acide azelaïque et d'hexaméthylène diamine (PA 6/69/11/12), des copolymères de caprolactame, de lauryllactame, d'acide amino 11 undécanoïque, d'acide adipique et d'hexaméthylène diamine (PA 6/66/11/12), des copolymères de lauryllactame, d'acide azélaïque et d'hexaméthylène diamine (PA 69/12), des copolymères d'acide amino 11 undécanoïque, d'acide téréphtalique et de décaméthylène diamine (PA 11/10T).

On peut utiliser des mélanges de polyamides. Ce sont par exemple des mélanges de polyamides aliphatiques et de polyamides semi-aromatiques et des mélanges de polyamides aliphatiques et de polyamides cycloaliphatiques.

A titre d'exemple, on peut citer les compositions transparentes décrites dans la demande de brevet EP1227131 comprenant en poids, le total étant 100% :
- 5 à 40% d'un polyamide amorphe (B) qui résulte essentiellement de la condensation :
   - soit d'au moins une diamine choisie parmi les diamines cycloaliphatiques et les diamines aliphatiques et d'au moins un diacide choisi, parmi les diacides cycloaliphatiques et les diacides aliphatiques, l'un au moins de ces motifs diamines ou diacides étant cycloaliphatique,
   - soit d'un acide alpha omega amino carboxylique cycloaliphatique,
   - soit d'une combinaison de ces deux possibilités,
   - et éventuellement d'au moins un monomère choisi parmi les acides alpha oméga amino carboxyliques ou les éventuels lactames correspondants, les diacides aliphatiques et les diamines aliphatiques,
- 0 à 40% d'un polyamide souple (C) choisi parmi les copolymeres a blocs polyamides et blocs polyether et les copolyamides,
- 0 à 20% d'un compatibilisant (D) de (A) et (B),
- 0 à 40% d'un modifiant souple (M),
- avec la condition que (C)+(D)+(M) est compris entre 0 et 50 %,
- le complément à 100% d'un polyamide (A) semi cristallin.

On peut encore citer les compositions transparentes décrites dans la demande de brevet EP 1227132 comprenant en poids, le total étant 100% :
- 5 à 40% d'un polyamide amorphe (B) qui résulte essentiellement de la condensation d'au moins une diamine éventuellement cycloaliphatique, d'au moins un diacide aromatique et éventuellement d'au moins un monomère choisi parmi : les acides alpha oméga amino carboxyliques, les diacides aliphatiques, les diamines aliphatiques,
- 0 à 40% d'un polyamide souple (C) choisi parmi les copolymeres a blocs polyamides et blocs polyéther et les copolyamides,
- 0 à 20% d'un compatibilisant (D) de (A) et (B),
- (C)+(D) est compris entre 2 et 50%,
- avec la condition que (B)+(C)+(D) n'est pas inferieur à 30%,
- le complément à 100% d'un polyamide (A) semi cristallin.

On ne sortirait pas du cadre de l'invention en remplaçant une partie du polyamide par un copolymère à blocs polyamide et blocs polyéther, c'est à dire en utilisant un mélange comprenant au moins un des polyamides précédents et au moins un copolymère à blocs polyamide et blocs polyéther.

Les copolymères à blocs polyamides et blocs polyéthers résultent de la copolycondensation de séquences polyamides à extrémités réactives avec des séquences polyéthers à extrémités réactives, telles que, entre autres :
1) Séquences polyamides à bouts de chaînes diamines avec des séquences polyoxyalkylènes à bouts de chaînes dicarboxyliques.
2) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-omega dihydroxylées aliphatiques appelées polyétherdiols.
3) Séquences polyamides à bouts de chaines dicarboxyliques avec des polyétherdiols, les produits obtenus étant, dans ce cas particulier, des polyétheresteramides. On utilise avantageusement ces copolymères.

Les séquences polyamides à bouts de chaines dicarboxyliques proviennent, par exemple, de la condensation d'acides alpha-omega aminocarboxyliques, de lactames ou de diacides carboxyliques et diamines en présence d'un diacide carboxylique limiteur de chaine.

Le polyéther peut être par exemple un polytétraméthylene glycol (PTMG). Ce dernier est aussi appelé polytétrahydrofurane (PTHF).

La masse molaire en nombre des séquences polyamides est comprise entre 300 et 15000 et de préférence entre 600 et 5 000 g/mol. La masse molaire des séquences polyéther est comprise entre 100 et 6 000 et de préférence entre 200 et 3 000 g/mol.

Les polymères à blocs polyamides et blocs polyéthers peuvent aussi comprendre des motifs repartis de façon aléatoire. Ces polymères peuvent être préparés par la réaction simultanée du polyéther et des précurseurs des blocs polyamides.

Par exemple, on peut faire réagir du polyétherdiol, un lactame (ou un alpha-omega amino acide) et un diacide limiteur de chaîne en présence d'un peu d'eau. On obtient un polymère ayant essentiellement des blocs polyéthers, des blocs polyamides de longueur très variable, mais aussi les différents réactifs ayant réagi de façon aléatoire qui sont repartis de façon statistique le long de la chaîne polymère.

Les blocs polyétherdiols sont soit utilises tels quels et copolycondensés avec des blocs polyamides à extrémités carboxyliques, soit ils sont aminés pour être transformés en polyéther diamines et condensés avec des blocs polyamides à extrémités carboxyliques. Ils peuvent être aussi mélangés avec des précurseurs de polyamide et un limiteur de chaîne pour faire les polymères à blocs polyamides et blocs polyéthers ayant des motifs répartis de façon statistique.

Le rapport de la quantité de copolymère à blocs polyamide et blocs polyéther sur la quantité de polyamide est avantageusement compris entre 1/99 et 15/85 en poids.

S'agissant du mélange de polyamide et d'au moins un autre polymère, il se présente sous forme d'un mélange à matrice polyamide et le (ou les) autre(s) polymère(s) forme(nt) la phase dispersée. A titre d'exemple de cet autre polymère on peut citer les polyoléfines, les polyesters, le polycarbonate, le PPO (abréviation de polyphénylène oxide), le PPS (abréviation de polyphénylène sulfide), les élastomères.

Le polyamide, qu'il soit ou non en mélange avec au moins un autre polymère peut contenir des charges, des pigments, des antioxydants, notamment combinés à l'antioxydant thioéther utilisé selon l'invention, et des anti UV.

La poudre destinée à l'impression 3D à base de polymère thermoplastique peut comprendre en outre un antioxydant autre que l'antioxydant thioéther.

A titre d'exemple d'antioxydants autre que l'antioxydant thioéther utilisé selon l'invention on peut citer les antioxydants phénoliques destinés à lutter contre la thermo-oxydation des polyamides, tel que le 3,3'-Bis(3,5-di-tert-butyl-4-hydroxyphenyl)-N,N'-hexamethylenedipropionamide commercialisé notamment sous le nom Palmarole AO.OH.98 par Palmarole, le (4,4'-Butylidenebis(2-t-butyl-5-methylphenol) commercialisé notamment sous le nom Lowinox 44B25 par Addivant, le Pentaerythritol tetrakis(3-(3,5-di-tertbutyl-4-hydroxyphenyl)propionate) commercialisé notamment sous le nom Irganox^{®} 1010 par BASF, le N,N'-hexane-1,6-diylbis(3-(3,5-di-tert-butyl-4- hydroxyphenylpropionamide)) commercialisé notamment sous le nom Irganox^{®} 1098 par BASF, le 3,3',3',5,5',5'-hexa-tert-butyl-a,a',a'-(mesitylene-2,4,6-triyl) tri-p-cresol commercialisé notamment sous le nom Irganox^{®} 1330 par BASF, l'Ethylenebis(oxyethylene)bis-(3-(5-tert-butyl-4-hydroxy-m- tolyl)propionate) commercialisé notamment sous le nom Irganox^{®} 245 par BASF, 1,3,5-tris(3,5-di-tert-butyl-4-hydroxybenzyl)-1,3,5-triazine-2,4,6(1H,3H, 5H)-trione commercialisé notamment sous le nom Irganox^{®} 3114 par BASF, le N'N'-(2 éthyl-2'éthoxyphényl)oxanilide commercialisé notamment sous le nom Tinuvin^{®} 312 par BASF, le Phenol 4,4',4"-trimethyl- 1,3,5-benzenetriyl) tris-(methylene)] tris 2,6-bis(1,1-dimethylethyl) commercialisé notamment sous le nom Alvinox^{®} 1330 par 3V, Hostanox 245 FF, Hostanox 245 Pwd, commercialisés par Clariant, le Pentaerythritol Tetrakis (3-(3,5-di-tert-butyl-4-hydroxyphenyl)propionate) commercialisé notamment sous les noms Evernox 10, Evernox 10GF, par Everspring Chemical Company Limited, l'Octadecyl-3-(3,5-di-tert-4-hydroxyphenyl)-propionate commercialisé notamment sous les noms Evernox 76, Evernox 76GF par Everspring Chemical Company Limited, le Tetrakis [Methylene-3(3',5'-di-tert-butyl-4-hydroxyphenyl) propionate] méthane commercialisé notamment sous le nom BNX^{®} 1010 par Mayzo, Thiodiethylene bis[3-(3,5-di- tert-butyl-4-hydroxyphenyl)propionate] commercialisé notamment sous le nom BNX^{®} 1035 par Mayzo, le Tetrakis [Methylene-3 (3',5'-di-tert-butyl-4-hydroxyphenyl)propionate] methane, Octadecyl-3-(3,5-di-tert-butyl-4-hydroxyphenyl)-propionate commercialisé notamment sous le nom BNX^{®} 2086 par Mayzo, le 1,3,5-tris(3,5-di-tert-butyl-4-hydroxybenzyl)-1,3,5- triazine-2,4,6(1H,3H,5H)trione commercialisé notamment sous le nom BNX^{®} 3114 par Mayzo.

Selon un mode de réalisation, lorsque la poudre de l'invention comprend un mélange d'antioxydants, l'antioxydant thioéther est présent de préférence plus de 50% en poids, par exemple plus de 55% en poids dans le mélange d'antioxydants, typiquement, plus de 58%, par exemple plus de 70%, par exemple, de 50 à 70%, de préférence de 50 à 65% en poids dans le mélange d'antioxydants.

Le procédé de l'invention est particulièrement utile pour les polyamides choisis parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 percent de motifs 11 soit plus de 90 percent de motifs 12.

A titre d'exemple de polyamides aliphatiques résultant de la condensation d'une diamine aliphatique ayant de 6 à 12 atomes de carbone et d'un diacide aliphatique ayant de 9 à 12 atomes de carbone on préfère notamment le PA 612 résultant de la condensation de l'hexaméthylène diamine et de l'acide 1,12-dodécanedioique ; le PA 912 résultant de la condensation de la diamine en C9 et de l'acide 1,12-dodécanedioique ; le PA 1010 résultant de la condensation de la diamine en C10 et de l'acide 1,10-décanedioïque ; le PA 1012 résultant de la condensation de la diamine en C10 et de l'acide 1,12-dodécanedioïque.

Quant aux copolyamides 11/12 ayant soit plus de 90 % de motifs 11 soit plus de 90% de motifs 12, ils résultent de la condensation de l'acide amino-11-undécanoique avec le lauryllactame (ou l'alpha omega amino acide en C12).

On ne sortirait pas du cadre de l'invention en utilisant un mélange de polyamides. L'antioxydant thioéther selon l'invention est le pentaerythritol tetrakis (3-dodecylthio propionate).

Cet antioxydant est notamment commercialisé par la société Adeka.

Ledit antioxydant thioéther représente au moins 0,1%, de préférence de 0,1 à 5%, de préférence de 0,1 à 4%, de préférence de 0,1 à 3%, de préférence de 0,1 à 2%, de préférence de 0,1 à 1%, sur le poids total de poudre représentant 100%. Typiquement, ledit thioéther représente au moins 0,2%, par exemple au moins 0,3%, typiquement au moins 0,4%, et typiquement moins de 5%, par exemple, moins de 4%, de préférence moins de 3% du poids total de poudre représentant 100%.

Selon l'invention, l'antioxydant thioéther tel que défini ci-dessus est incorporé à la poudre par toute méthode adéquate connue de l'homme du métier, par exemple par au moins une des méthodes suivantes : ajout de thioéther lors de la synthèse du polyamide, notamment en début ou en fin de synthèse, par mélange par compoundage, lors d'une quelconque étape d'un procédé de fabrication de poudre à partir dudit polyamide, notamment par dissolution-précipitation de polyamide dans un solvant contenant le thioéther, par exemple dispersé ou dissous dans le solvant, ou par mélange à sec (dry blend) avec la poudre destinée à l'impression 3D.

De préférence, la composition selon l'invention est sous forme de poudre de diamètre médian en volume (D50) compris dans la gamme de 5 à 200 µm, de préférence sous forme de poudre de D50 compris dans la gamme de 10 à 150 µm.

Le polymère, notamment polyamide, de départ utilisé dans le procédé et/ou la composition de l'invention est de préférence sous forme divisée, sous forme de granulés ou de poudre. Il est de préférence sous forme de poudre de D50 compris dans la gamme de 10 à 150 µm, de préférence de 30 à 80 µm. Lorsque des granulés de polymère sont mis en œuvre dans le procédé selon l'invention, ils pourront à l'issue du procédé, être broyés de façon à obtenir une poudre de D50 compris dans la gamme de 10 à 150 µm.

Le thioéther mis en œuvre selon l'invention est de préférence sous forme de poudre.

La présente invention a encore pour objet un procédé de fabrication d'objets par agglomération de poudres de polyamide par fusion utilisant un rayonnement ou procédé de frittage, les poudres étant de composition conforme à celle du PA défini précédemment ou résultant d'un procédé conforme à celui décrit plus haut. N'importe quel dispositif de frittage connu dans ce domaine peut être utilisé, tel que les dispositifs commercialisés par EOS, 3D Systems, Aspect, Trump Precision Machinery, Hewlett Packard, Sinterit, Sintratec, Sharebot, FormLabs, Sonda Sys, Farsoon, Prodways, Ricoh, Wematter3D, VoxelJet, Xaar, etc. On peut notamment citer les appareils EOSINT P396 ou encore Formiga P100 d'EOS GmbH.

Dans la présente description de l'invention, y-compris dans les exemples ci-après :
- le D50 aussi appelé ici « diamètre médian en volume » correspond à la valeur de la taille de particule qui divise la population de particules examinée exactement en deux. Le D50 est mesuré selon la norme ISO 13320-1 . Dans la présente description, on utilise un granulomètre Malvern Insitec et un logiciel RTSizer pour obtenir la distribution granulométrique de la poudre et en déduire le D50.
- la viscosité inhérente ou intrinsèque en solution (notamment du polyamide, des poudres ou des pièces fabriquées par frittage) est mesurée selon la norme ISO 307:2007 à une concentration de 0,5% en poids en solution dans du métacrésol sur le poids total de la solution, à une température de 20°C, au moyen d'un viscosimètre Ubbelohde ;
- les propriétés mécaniques, notamment le module en traction et l'allongement à la rupture, sont mesurées selon la norme selon la norme ISO 527-1B : 2012.
- l'analyse des caractéristiques thermiques du polyamide est faite par DSC selon la norme ISO 11357-3 "Plastics - Differential Scanning Calorimetry (DSC) Part 3: Determination of temperature and enthalpy of melting and crystallization". Les températures qui intéressent ici plus particulièrement l'invention sont la température de fusion lors de la première chauffe (Tf1), la température de cristallisation (Tc) et l'enthalpie de fusion.
- le jaunissement est quantifié par l'indice de jaune (yellowness index, YI) mesuré selon la norme ASTM E313-96 (D65), notamment à l'aide d'un spectrocolorimètre Konica Minolta illuminant D65 sous 10° en mode réflexion spéculaire incluse (SCI).

### EXEMPLES

### Exemple 1

### Matériaux utilisés :

- Polymère : polyamide (PA) :
   - poudre de PA 11 synthétisée par broyage d'un polymère obtenu par polycondensation de l'acide amino-11-undécanoïque, mélangée à un antioxydant phénolique standard pour PA (Irganox 245 (BASF) à 0,3% ou Palmarole AO.OH.98 ultrafin (Palmarole) à 0,6% pour l'Exemple comparatif sans antioxydant destiné à lutter contre le vieillissement).
- Antioxydants destinés à lutter contre le vieillissement :
   - dilauryl thiodipropionate (DLTDP), commercialisé par Songnox ;
   - pentaerythritol tetrakis (3-dodecylthio propionate), commercialisé par Adeka.
   - antioxydant diphosphonite, commercialisé par Clariant (P-EPQ)

### 1.1- Evaluation des coulabilités à T°C ambiante (23°C) des deux formules :

Le test de coulabilité consiste à mesurer le temps d'écoulement de 150 g de poudre au travers d'un entonnoir, selon la Norme ISO 6186 : 1998(E) Méthode A.

Le test est fait sur la poudre à T°C ambiante, les mesures sont réalisées avec l'entonnoir d'ouverture 15 mm. Les résultats sont indiqués dans le tableau 1 suivant :

**Tableau 1**

| | **Coulabilité à T °C ambiante** *(temps en secondes)* |
|---|---|
| | Ø 15 mm |
| PA11 (viscosité 1,12) **+0,5% DLTDP** | 30s |
| PA11 (viscosité 1,12) **+0,5% pentaerythritol tetrakis (3-dodecylthio propionate)** | 34s |

### 1.2- Test de vieillissement

Le test consiste à exposer la poudre de polyamide à une température de 10 à 30°C inférieure à la température de fusion Tf du polyamide pur (de Tf-30°C à Tf-10°C), en flacon de verre placé en étuve ventilée à l'air, en particulier à 180°C dans cet Exemple. Ce test simule les conditions d'exposition que peut subir une poudre dans une machine 3D, pendant 1 run ou plusieurs runs, selon les durées d'exposition.

Les durées d'exposition vont de 0 à 90h, par exemple 48h (1 run), 72h (2 runs) (1 flacon par prélèvement).

### 1.2-1 Indice de jaune (YI)

Les mesures sont faites sur spectrocolorimètre Konica Minolta illuminant D65 sous 10° en mode SCI selon la norme ASTM YI (E313-96) (D65).

**Tableau 2**

| YI | **Exemple selon l'invention** | *Exemples comparatifs* | | |
|---|---|---|---|---|
| Polymère thermoplastique | PA11 | PA11 | *PA11* | *PA11* |
| Additif | **0,5% pentaerythritol tetrakis (3-dodecylthio propionate)** | **0,5% DLTDP** | - | *0,5% P-EPQ* |
| T₀ | 1,5 | 1,4 | 2,3 | 2.5 |
| 48h | 8,7 | 13,0 | - | |
| 72h | 28,7 | 40,6 | *Mesure impossible* | *48.1* |

L'antioxydant thioéther 3-dodecylthiopropionate est plus performant que l'antioxydant thioéther DLTDP en termes de prévention du jaunissement, lui-même plus performant que l'antioxydant diphosphonite P-EPQ (non-thioéther).

### 1.2-2 Viscosité inhérente de la poudre de PA

La viscosité inhérente est mesurée à 20°C, en solution à 0,5% massique dans le métacrésol selon la norme ISO 307:2007.

**Tableau 3**

| Viscosité inhérente | **Exemple selon l'invention** | *Exemples comparatifs* | | |
|---|---|---|---|---|
| Polymère thermoplastique | PA11 | PA11 | *PA11* | *PA11* |
| Additif | **0,5%** pentaerythritol tetrakis (3-dodecylthio propionate) | **0,5% DLTDP** | - | *0,5% P-EPQ* |
| T₀ | 1,21 | 1,21 | *1,12* | *1,09* |
| 48h | 1,55 | 1,57 | - | |
| 72h | 1,44 | 1,37 | *Mesure impossible* | *0,89* |

L'antioxydant thioéther 3-dodecylthiopropionate est légèrement plus performant que l'antioxydant DLTDP. Les performances obtenues avec les deux antioxydants thioéther après 72h de vieillissement sont nettement meilleures que celles obtenues pour l'antioxydant diphosphonite P-EPQ (non-thioéther).

### Exemple 2

### Matériaux utilisés :

- Polymère : polyamide (PA) :
   - poudre de PA 12 synthétisée par broyage d'un polymère obtenu par polymérisation directe du lauryllactame mélangée à un antioxydant phénolique standard pour PA (Irganox 245 (BASF) à 0,3% pour l'Exemple, Lowinox 44B25 (Addivant) à 0.5% pour l'Exemple comparatif).
- Antioxydants destinés à lutter contre le vieillissement :
   - pentaerythritol tetrakis (3-dodecylthio propionate), commercialisé par Adeka.

La poudre et l'antioxydant sont mélangés à sec.

### Test de vieillissement

La poudre de polyamide est exposée à une température de 170°C en étuve (FGE 140) sous air, pendant 72 heures

### 2.1. Indice de jaune (YI)

Les mesures sont faites sur spectrocolorimètre Konica Minolta illuminant D65 sous 10° en mode SCI selon la norme ASTM YI (E313-96) (D65).

**Tableau 4**

| YI | **Exemple selon l'invention** | *Exemple comparatifs* |
|---|---|---|
| Polymère thermoplastique | PA12 | *PA12* |
| Additif | **0,5% pentaerythritol tetrakis (3-dodecylthio propionate)** | - |
| T₀ | 1,7 | *2,4* |
| 72h | 11,2 | *12,2* |

### 2.2 Viscosité inhérente de la poudre de PA

La viscosité inhérente est mesurée à 20°C, en solution à 0,5% massique dans le métacrésol selon la norme ISO 307:2007.

**Tableau 5**

| Viscosité inhérente | **Exemples selon l'invention** | *Exemples comparatifs* |
|---|---|---|
| Polymère thermoplastique | PA12 | *PA12* |
| Additif | **0,5% pentaerythritol tetrakis (3-dodecylthio propionate)** | - |
| T₀ | 1,28 | *1,28* |
| 72h | 1,23 | *1,22* |

En définitive, le procédé selon l'invention, par le contrôle de la nature et de la quantité d'antioxydant au sein de la poudre polyamide que l'on engage lors de la première construction par frittage, permet d'augmenter la recyclabilité de la poudre, et d'obtenir une poudre, dans laquelle l'évolution de couleur, notamment le jaunissement, et l'évolution de masse moléculaire subie par la poudre non fondue pendant chaque construction, ont été maîtrisées à l'avance de manière simple dans la poudre que l'on engage lors de la première construction.

## Revendications

1. Poudre destinée à l'impression 3D, à base de polymère thermoplastique, **caractérisée en ce qu'**elle contient au moins 0,1 % en poids d'au moins un antioxydant thioéther sur le poids total de poudre, et dans laquelle ledit au moins un antioxydant thioéther est le pentaerythritol tetrakis (3-dodecylthio propionate ou 3-laurylthiopropionate).

2. Poudre selon l'une quelconque des revendications 1, dans laquelle ledit au moins un antioxydant thioéther représente de 0,1 à 5%, de préférence 0,1 à 4%, de préférence de 0,1 à 3%, de préférence de 0,1 à 2%, de préférence de 0,1 à 1%, sur le poids total de poudre représentant 100%.

3. Poudre selon la revendication 1 ou 2, dans laquelle ledit polymère thermoplastique est choisi parmi : polyoléfine, polyéthylène, polypropylène, polychlorure de vinyle, polyacétal, polystyrène, polyimide, polysulfone, poly (N-méthylméthacrylimide), polyméthacrylate de méthyle, fluorure de polyvinylidène, ionomère, polyéthercétone, polyaryléthercétone, polyamide, polyéther, polyester, polydiméthylsiloxane, polycarbonate, et leurs mélanges sous forme de copolymères alternés, statistiques ou à blocs.

4. Poudre selon l'une quelconque des revendications 1 à 3, dans laquelle ledit polymère comprend au moins un polyamide, de préférence issu de polycondensation hydrolytique, choisi parmi le PA11, le PA12, le PA10.10, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11 soit plus de 90 % de motifs 12.

5. Poudre selon l'une quelconque des revendications 1 à 4, dans laquelle le polymère est sous forme de poudre de diamètre médian en volume D50, mesuré selon la norme ISO 13320-1, compris dans la gamme de 10 à 150 µm, de préférence de 20 à 100 µm, de préférence de 30 à 60 µm.

6. Procédé pour stabiliser la couleur d'une poudre à base de polymère thermoplastique dans un procédé d'impression 3D, dans lequel on incorpore au moins 0,1% en poids d'au moins un antioxydant thioéther sur le poids total de poudre, dans lequel ledit au moins un antioxydant thioéther est choisi le pentaerythritol tetrakis (3-dodecylthio propionate ou 3-laurylthiopropionate).

7. Procédé selon la revendication 6 , dans lequel ledit au moins un antioxydant thioéther représente de 0,1 à 5%, de préférence de 0,1 à 4%, de préférence de 0,1 à 3%, de préférence de 0,1 à 2%, de préférence de 0,1 à 1%, sur le poids total de poudre représentant 100%.

8. Procédé selon l'une quelconque des revendications 6 ou 7, dans lequel le thioéther est incorporé par au moins une des méthodes suivantes : imprégnation du polymère dans une dispersion aqueuse du thioéther, ajout de thioéther lors de la synthèse du polymère, notamment en début ou en fin de synthèse, par mélange par compoundage, ou lors d'une quelconque étape d'un procédé de fabrication de poudre à partir dudit polymère, notamment par dissolution-précipitation de polymère dans un solvant contenant le thioéther.

9. Procédé selon l'une quelconque des revendications 6 à 8, dans lequel ledit polymère thermoplastique est choisi parmi : polyoléfine, polyéthylène, polypropylène, polychlorure de vinyle, polyacétal, polystyrène, polyimide, polysulfone, poly (N-méthylméthacrylimide), polyméthacrylate de méthyle, fluorure de polyvinylidène, ionomère, polyéthercétone, polyaryléthercétone, polyamide, polyéther, polyester, polydiméthylsiloxane, polycarbonate, et leurs mélanges sous forme de copolymères alternés, statistiques ou à blocs.

10. Procédé selon l'une quelconque des revendications 6 à 9, dans lequel ledit polymère comprend au moins un polyamide (homopolyamide ou copolyamide), de préférence issu de polycondensation hydrolytique, ledit polyamide étant choisi de préférence parmi le PA11, le PA12, le PA10.10, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90 % de motifs 11 soit plus de 90 % de motifs 12.

11. Procédé selon l'une quelconque des revendications 6 à 10, dans lequel le polyamide est sous forme de poudre de diamètre médian en volume D50, mesuré selon la norme ISO 13320-1, compris dans la gamme de 10 à 150 µm, de préférence de 20 à 100 µm, de préférence de 30 à 60 µm.

12. Procédé d'impression 3D utilisant une poudre selon l'une quelconque des revendications 1 à 5.

13. Procédé de fabrication d'article par frittage en utilisant une poudre selon l'une quelconque des revendications 1 à 5, dans lequel la poudre non-frittée est récupérée et réutilisée.

14. Utilisation d'au moins un antioxydant thioéther pour stabiliser la couleur d'une poudre destinée à l'impression 3D, à base de polymère thermoplastique, dans laquelle l'antioxydant thioéther est le pentaerythritol tetrakis (3-dodecylthio propionate ou 3-laurylthiopropionate).

## Patentansprüche

1. Pulver für den 3D-Druck auf Basis von thermoplastischem Polymer, **dadurch gekennzeichnet, dass** es mindestens 0,1 Gew.-% mindestens eines Thioether-Antioxidans, bezogen auf das Gesamtgewicht des Pulvers, enthält, und wobei es sich bei dem mindestens einen Thioether-Antioxidans um Pentaerythritoltetrakis(3-dodecylthiopropionat oder 3-laurylthiopropionat) handelt.

2. Pulver nach einem der Ansprüche 1, wobei das mindestens eine Thioether-Antioxidans 0,1 % bis 5 %, vorzugsweise 0,1 % bis 4 %, vorzugsweise 0,1 % bis 3 %, vorzugsweise 0,1 % bis 2 %, vorzugsweise 0,1 % bis 1 %, bezogen auf das Gesamtgewicht des Pulvers, das 100 % beträgt, ausmacht.

3. Pulver nach Anspruch 1 oder 2, wobei das thermoplastische Polymer ausgewählt ist aus: Polyolefin, Polyethylen, Polypropylen, Polyvinylchlorid, Polyacetal, Polystyrol, Polyimid, Polysulfon, Poly(N-methylmethacrylimid), Polymethylmethacrylat, Polyvinylidenfluorid, Ionomer, Polyetherketon, Polyaryletherketon, Polyamid, Polyether, Polyester, Polydimethylsiloxan, Polycarbonat und Mischungen davon in Form von alternierenden, statistischen oder blockartig aufgebauten Copolymeren.

4. Pulver nach einem der Ansprüche 1 bis 3, wobei das Polymer mindestens ein vorzugsweise aus einer hydrolytischen Polykondensation gewonnenes Polyamid umfasst, das aus PA11, PA12 und PA10.10, durch Kondensation eines aliphatischen Diamins mit 6 bis 12 Kohlenstoffatomen und einer aliphatischen Disäure mit 9 bis 12 Kohlenstoffatomen erhaltenen aliphatischen Polyamiden und Copolyamiden 11/12, die entweder mehr als 90 % 11-Einheiten oder mehr als 90 % 12-Einheiten enthalten, ausgewählt ist.

5. Pulver nach einem der Ansprüche 1 bis 4, wobei das Polymer in Form eines Pulvers mit einem volumenmittleren Durchmesser D50, gemessen gemäß der ISO-Norm 13320-1, im Bereich von 10 bis 150 µm, vorzugsweise von 20 bis 100 µm, vorzugsweise von 30 bis 60 µm, vorliegt.

6. Verfahren zur Stabilisierung der Farbe eines Pulvers auf Basis von thermoplastischem Polymer in einem 3D-Druckverfahren, bei dem man mindestens 0,1 Gew.-% mindestens eines Thioether-Antioxidans, bezogen auf das Gesamtgewicht des Pulvers, einarbeitet, wobei das mindestens eine Thioether-Antioxidans Pentaerythritoltetrakis(3-dodecylthiopropionat oder 3-laurylthiopropionat) gewählt wird.

7. Verfahren nach Anspruch 6, wobei das mindestens eine Thioether-Antioxidans 0,1 % bis 5 %, vorzugsweise 0,1 % bis 4 %, vorzugsweise 0,1 % bis 3 %, vorzugsweise 0,1 % bis 2 %, vorzugsweise 0,1 % bis 1 %, bezogen auf das Gesamtgewicht des Pulvers, das 100 % beträgt, ausmacht.

8. Verfahren nach einem der Ansprüche 6 oder 7, wobei der Thioether durch mindestens eine der folgenden Methoden eingearbeitet wird: Imprägnierung des Polymers in einer wässrigen Dispersion des Thioethers, Zugabe von Thioether während der Synthese des Polymers, insbesondere am Anfang oder am Ende der Synthese, durch Mischen mittels Compoundieren oder während eines beliebigen Schritts eines Verfahrens zur Herstellung von Pulver aus dem Polymer, insbesondere durch Auflösung-Ausfällung von Polymer in einem den Thioether enthaltenden Lösungsmittel.

9. Verfahren nach einem der Ansprüche 6 bis 8, wobei das thermoplastische Polymer ausgewählt ist aus: Polyolefin, Polyethylen, Polypropylen, Polyvinylchlorid, Polyacetal, Polystyrol, Polyimid, Polysulfon, Poly(N-methylmethacrylimid), Polymethylmethacrylat, Polyvinylidenfluorid, Ionomer, Polyetherketon, Polyaryletherketon, Polyamid, Polyether, Polyester, Polydimethylsiloxan, Polycarbonat und Mischungen davon in Form von alternierenden, statistischen oder blockartig aufgebauten Copolymeren.

10. Verfahren nach einem der Ansprüche 6 bis 9, wobei das Polymer mindestens ein vorzugsweise aus einer hydrolytischen Polykondensation gewonnenes Polyamid (Homopolyamid oder Copolyamid) umfasst, wobei das Polyamid vorzugsweise aus PA11, PA12 und PA10.10, durch Kondensation eines aliphatischen Diamins mit 6 bis 12 Kohlenstoffatomen und einer aliphatischen Disäure mit 9 bis 12 Kohlenstoffatomen erhaltenen aliphatischen Polyamiden und Copolyamiden 11/12, die entweder mehr als 90 % 11-Einheiten oder mehr als 90 % 12-Einheiten enthalten, ausgewählt ist.

11. Verfahren nach einem der Ansprüche 6 bis 10, wobei das Polyamid in Form eines Pulvers mit einem volumenmittleren Durchmesser D50, gemessen gemäß der ISO-Norm 13320-1, im Bereich von 10 bis 150 µm, vorzugsweise von 20 bis 100 µm, vorzugsweise von 30 bis 60 µm, vorliegt.

12. 3D-Druckverfahren unter Verwendung eines Pulvers nach einem der Ansprüche 1 bis 5.

13. Verfahren zur Herstellung eines Gegenstands durch Sintern unter Verwendung eines Pulvers nach einem der Ansprüche 1 bis 5, wobei das nicht gesinterte Pulver zurückgewonnen und wiederverwendet wird.

14. Verwendung von mindestens einem Thioether-Antioxidans zur Stabilisierung der Farbe eines Pulvers für den 3D-Druck auf Basis von thermoplastischem Polymer, wobei es sich bei dem Thioether-Antioxidans um Pentaerythritoltetrakis(3-dodecylthiopropionat oder 3-laurylthiopropionat) handelt.

## Claims

1. Powder intended for 3D printing, based on thermoplastic polymer, **characterized in that** it contains at least 0.1% by weight of at least one thioether antioxidant relative to the total weight of powder, and in which said at least one thioether antioxidant is pentaerythritol tetrakis(3-dodecylthiopropionate or 3-laurylthiopropionate).

2. Powder according to any one of Claims 1, in which said at least one thioether antioxidant represents from 0.1% to 5%, preferably from 0.1% to 4%, preferably from 0.1% to 3%, preferably from 0.1% to 2%, preferably from 0.1% to 1%, relative to the total weight of powder representing 100%.

3. Powder according to Claim 1 or 2, in which said thermoplastic polymer is chosen from: polyolefin, polyethylene, polypropylene, polyvinyl chloride, polyacetal, polystyrene, polyimide, polysulfone, poly(N-methylmethacrylimide), polymethyl methacrylate, polyvinylidene fluoride, ionomer, polyether ketone, polyaryl ether ketone, polyamide, polyether, polyester, polydimethylsiloxane, polycarbonate and mixtures thereof in the form of alternating, statistical or block copolymers.

4. Powder according to any one of Claims 1 to 3, in which said polymer comprises at least one polyamide, preferably obtained from hydrolytic polycondensation, chosen from PA11, PA12, PA10.10, aliphatic polyamides resulting from the condensation of an aliphatic diamine containing from 6 to 12 carbon atoms and of an aliphatic diacid containing from 9 to 12 carbon atoms and copolyamides 11/12 containing either more than 90% of units 11 or more than 90% of units 12.

5. Powder according to any one of Claims 1 to 4, in which the polymer is in the form of a powder with a volume-median diameter D50, measured according to the standard ISO 13320-1, in the range from 10 to 150 µm, preferably from 20 to 100 µm, preferably from 30 to 60 µm.

6. Process for stabilizing the colour of a powder based on thermoplastic polymer in a 3D printing process, in which at least 0.1% by weight of at least one thioether antioxidant is incorporated relative to the total weight of powder, in which said at least one thioether antioxidant is chosen pentaerythritol tetrakis(3-dodecylthiopropionate or 3-laurylthiopropionate).

7. Process according to Claim 6, in which said at least one thioether antioxidant represents from 0.1% to 5%, preferably from 0.1% to 4%, preferably from 0.1% to 3%, preferably from 0.1% to 2%, preferably from 0.1% to 1%, relative to the total weight of powder representing 100%.

8. Process according to either one of Claims 6 and 7, in which the thioether is incorporated by at least one of the following methods: impregnation of the polymer in an aqueous dispersion of the thioether, addition of thioether during the synthesis of the polymer, notably at the start or at the end of the synthesis, by blending by compounding, or during any step of a powder manufacturing process starting with said polymer, notably by dissolution-precipitation of polymer in a solvent containing the thioether.

9. Process according to any one of Claims 6 to 8, in which said thermoplastic polymer is chosen from: polyolefin, polyethylene, polypropylene, polyvinyl chloride, polyacetal, polystyrene, polyimide, polysulfone, poly(N-methylmethacrylimide), polymethyl methacrylate, polyvinylidene fluoride, ionomer, polyether ketone, polyaryl ether ketone, polyamide, polyether, polyester, polydimethylsiloxane, polycarbonate and mixtures thereof in the form of alternating, statistical or block copolymers.

10. Process according to any one of Claims 6 to 9, in which said polymer comprises at least one polyamide (homopolyamide or copolyamide) preferably obtained from hydrolytic polycondensation, said polyamide preferably being chosen from PA11, PA12, PA10.10, aliphatic polyamides resulting from the condensation of an aliphatic diamine containing from 6 to 12 carbon atoms and of an aliphatic diacid containing from 9 to 12 carbon atoms and copolyamides 11/12 containing either more than 90% of units 11 or more than 90% of units 12.

11. Process according to any one of Claims 6 to 10, in which the polyamide is in the form of a powder with a volume-median diameter D50, measured according to the standard ISO 13320-1, in the range from 10 to 150 µm, preferably from 20 to 100 µm, preferably from 30 to 60 µm.

12. 3D printing process using a powder according to any one of Claims 1 to 5.

13. Process for manufacturing an article by sintering using a powder according to any one of Claims 1 to 5, in which the unsintered powder is recovered and reused.

14. Use of at least one thioether antioxidant for stabilizing the colour of a powder intended for 3D printing, based on thermoplastic polymer, in which the thioether antioxidant is pentaerythritol tetrakis(3-dodecylthiopropionate or 3-laurylthiopropionate).
